# EUROPEAN PATENT SPECIFICATION

(11) **EP 4 029 847 B1**
(45) Date of publication and mention of the grant of the patent: **11.09.2024**
(21) Application number: 21152416.0
(22) Date of filing: 19.01.2021
(51) Int. Cl.: C05G 5/30, C05G 5/12

(54) **SULFUR COATED FERTILIZERS WITH POLYMER COATING LAYER**
SCHWEFELBESCHICHTETE DÜNGEMITTEL MIT POLYMERSCHICHT
FERTILISANTS REVÊTUS DE SOUFRE COMPRENANT UNE COUCHE DE REVÊTEMENT POLYMÈRE

(43) Date of publication of application: 20.07.2022
(73) Proprietor: Everris International B.V., 6422 PD Heerlen (NL)
(72) Inventor: Vannuys, Petra Leonarda Hendrica, 6446 BS Brunssum (NL); Sijstermans, Susan Tine Kathelyne, 6165 BC Geleen (NL); Mora, Antonio Manuel Gil, 6221 JA Maastricht (NL); Hernández Martínez, Jesús, 4600 Visé (BE); Paquaij, Josephus Barbara Gerardus, 6245 PK Eijsden (NL); Out, Gerardus Jacobus Joseph, 6132 HB Sittard (NL)
(74) Representative: Hoyng Rokh Monegier B.V.

(56) References cited:
- JP-A- H11 130 576
- US-A- 5 219 465

## Description

The invention relates to polymer and sulfur coated fertilizers.

### BACKGROUND

The concept of controlled release fertilizers (CRFs) is well known in the art. It involves protecting a granule comprising a fertilizer with a coating that will make the nutrients release into the field in a controlled manner. Within the different technologies of CRFs, sulfur coated urea (SCU) is currently the most important, see Trenkel, M.E. (2010) Slow- and controlled-release and stabilized fertilizers: An option for enhancing nutrient use efficiency in agriculture, International Fertilizer Industry Association.

Sulfur coated urea uses elemental sulfur (molten and recrystallized on the fertilizer granules) as the barrier coating. The process was developed by the Tennessee Valley Authority (TVA) in the early 60s. Despite the generic name "SCU" sulfur can be used to coat different types of fertilizers not only urea e.g. potash, potassium chloride, MAP (monoammonium phosphate) and the like. More generally, the sulfur coated fertilizers can be abbreviated as SCF (sulfur coated fertilizers).

Commonly a topcoat layer is added to SCF to seal the imperfections and pores of the sulfur layer and to improve the abrasion resistance of the coating since sulfur is very brittle. The name PSCF (polymer sulfur coated fertilizers) is also used to indicate the presence of this polymer-containing layer.

US patent 5,219,465 describes a top-coating polymeric composition consisting of 5-50 % by weight of polymer selected from the group of ethylene-vinyl acetate copolymers and ethylene acrylic-acid copolymers and 95-50% of a hydrocarbon wax selected from the group of natural petroleum waxes having melt points around 60°C and 80°C and synthetic hydrocarbon waxes with melting points between 60°C and 105°C.

U.S. patent 5,466,274 describes a composition of this top-coating layer to provide improved characteristics to sulfur coated fertilizers, consisting on a blend of hydrocarbon wax and polymers like ethylene-vinyl acetate copolymers, ethylene-acrylic acid copolymers, ethylene-ethyl acrylate copolymers, ethylene-vinyl alcohols copolymers, ethylene-vinyl alcohol-vinyl acetate terpolymers and mixtures thereof.

JPH11228274 (A) mentions the use of a sealant wax such as vegetable waxes like: wood wax, jojoba oil, carnauba wax, rice wax, candelilla wax; lanolin, honey wax, whale wax and the like. Animal waxes; mineral waxes such as montan wax, selecin, ozokelite; petroleum waxes such as paraffin wax, petrolatum, microcrystalin wax, synthetic hydrocarbon waxes such as fisher tropsch wax, polyethylene wax, and hardened castor oil. An extra protective layer consisting of a water-soluble polymer is also added chosen from the group of polyvinyl alcohol, polyethylene glycol, polyvinylpyrrolidone, polyacrylamide, polyacrylic acid, polymethacrylic acid, polyvinylamine, polyethylene oxide, methylcellulose, carboxymethylcellulose, gelatin, gum arabic and maleic anhydride.

SCF (and PSCF) present, even in the most improved versions in the market, two typical undesired characteristics in their release (Trenkel 2010):
- A relatively high release in the first days of application. This is a common complaint by end users
- Lock-off effect. A considerable amount of nutrients remains unreleased after the expected longevity of the controlled release fertilizer.

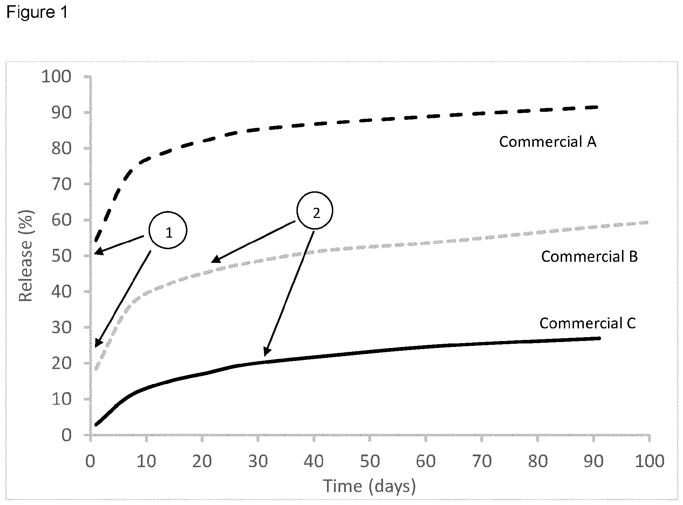

This is exemplified in figure 1. In Fig 1 the release in a water leach test of different products available in the market are compared. The top graph represents a product with relatively low amount of coating. The release in the first days is very high, after which virtually all product is released thereafter. The bottom line shows a product with relatively high coating weight. The initial release is much lower, but a substantial part of the fertilizer is locked in the granule. The middle line represents a product with a medium amount of coating. The resulting release profile also averages, but is not fully acceptable either.

There is, in consequence, a need to overcome these limitations to improve the release of the PSCFs. Firstly, by reducing the lock-off the fertilization efficiency improves which limits the (over-)dosing of PSCF. Secondly, by limiting the burst release the safety towards plants is improved. High amounts of fertilizers can damage small plants. If an amount of upfront release is needed - for instance when a plant is larger or well established - this can be achieved more economically by using uncoated fertilizers than by using a PSCF with a high burst initial release.

### SUMMARY OF THE INVENTION

It is an object of the invention to provide a polymer coat layer on a sulfur coated fertilizer, such that good controlled release properties are obtained.

It is furthermore an object of this invention to provide an improved polymer coat layer for sulfur coated fertilizers, which can overcome the limitations mentioned above and present a low initial release combined with a gradual release over time limiting a nutrient lock off.

The invention, achieving either one, or both objectives described above, provides for a sulfur coated fertilizer granule, having a polymer coating on the sulfur layer, wherein the polymer coating comprises polycaprolactone, which is a polymer or copolymer including caprolactone monomers.

The invention, achieving either one, or both objectives described above, also provides for a sulfur coated granular fertilizer having a polymer coating on the sulfur layer, wherein the polymer coating comprises polycaprolactone, which is a polymer or copolymer including caprolactone monomers:
a. wherein the granular fertilizer has a size, as average diameter, between 0.5 and about 10 mm,
b. wherein the sulfur coating is present in amounts of between 5 and 30 parts by weight relative to the fertilizer core,
c. wherein the polymer coating comprises about 50 wt% or more of polycaprolactone,
d. wherein the amount of polymer coating relative to the fertilizer is between 1 pph to 10 pph,
wherein the fertilizer exhibits in a laboratory water leach test the following properties:
a. an initial release of about 20% nutrient or less in 24 h, preferable about 15% or less;
b. a release of more than 4% of the nutrient content between the days 14 and 21 from the beginning of the water leach test, preferably about 5% or more.

The polycaprolactone top-coating provides good balance properties between water barrier and water permeability to provide an outstanding controlled release pattern. The polycaprolactone layer shows good resistance to mechanical stress and has enough impact resistance to withstand process handling and final use in the field.

The polymer coating comprises a polycaprolactone, which may have a varying molecular weight, such as between about 1000 and about 50.000, and mixtures thereof. Preferably, the polycaprolactone has a molecular weight of about 30000 or lower. The polymer coating preferably comprises about 50 wt% or more of polycaprolactone, more preferably about 70 wt% or more.

The sulfur coated fertilizer with such a polycaprolactone coating layer provides outstanding release properties which are evident from the results on a standardized water leach test:
- Lower initial release (typically <20% nutrient released in 24 h)
- Extended release over the whole duration of the product limiting a lock off.

### DESCRIPTION OF THE FIGURES

Figure 1 shows the results of a water leach test of commercial polymer coated sulfur coated urea granules.
Figure 2 shows the results of a water leach test of polymer coated sulfur coated urea granules, of polymer coatings described in the prior art.
Figure 3 shows the results of a water leach test of polycaprolactone coated sulfur coated urea granules.
Figure 4 shows the results of a water leach test of other polycaprolactone coated sulfur coated urea granules.
Figure 5 shows the results of a water leach test of yet other polycaprolactone coated sulfur coated urea granules.
Figure 6 shows the results of a laboratory water leach test and a field test of polycaprolactone coated sulfur coated urea granule in comparison with a reference product.
Figure 7 shows the results of a laboratory water leach test of a polycaprolactone coated sulfur coated urea granule in comparison with a reference product before and after a mechanical stress test.

### DETAILED DESCRIPTION OF THE INVENTION

The sulfur coated granular fertilizer according to the present invention comprises a fertilizer core, a sulfur layer on the fertilizer core, and a polymer coating on the sulfur layer, wherein the polymer coating comprises an aliphatic polyester, which is polycaprolactone, which is a polymer or copolymer including caprolactone monomers.

The fertilizer core can be any granular fertilizer, and preferably is chosen from urea, KCI (MOP), K₂SO₄ (SOP), Ammonium sulfate, NH₄NO₃, mono ammonium phosphate (MAP), di ammonium phosphate (DAP), compound NPK fertilizers (like 21+10+11 NPK fertilizer composed of ammonium nitrate, ammonium phosphate and potassium sulphate) or mixtures thereof. Urea is most preferred. The fertilizer core has a size, as average diameter, between 0.5 and 10 mm, preferably between 1 and 5 mm.

The sulfur is present in amounts of between 5 and 30 parts by weight relative to the fertilizer core. Preferably, the amount is between 10 and 20 parts per hundred parts by weight (pph) of the fertilizer core, like for example about 12 pph or 16 pph relative to the fertilizer core. The sulfur generally is pure sulfur, and applied as molten pure compound.

Polycaprolactone (PCL) as used in this document refers to any polymer or copolymer including the following repeating unit:

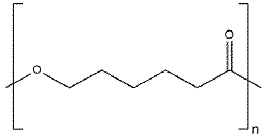

This includes the standard polyester polymer but also the known as polycaprolactone diols or polycaprolactone triols in which the repeating unit is attached to a diol or a triol like e.g. diethylene glycol as shown in the structure below:

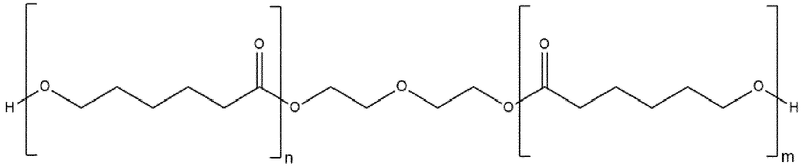

The number of repeating units in both figures is indicated by m and/or n. One can calculate the average repeating numbers from the average molecular weight.

Preferably, the polymer coating comprises a polycaprolactone having a varying molecular weight between about 1000 and about 50.000, and mixtures thereof. Preferably, the polycaprolactone has a molecular weight of about 30.000 or lower. In a more preferred embodiment, the polycaprolactone is a single product with one peak-molecular weight, or is a blend of polycaprolactone polymers with at least two peak molecular weights, wherein the average molecular weight of the polycaprolactone is in the range of about 5000 to about 20000, preferably about 6000 to about 15000.

Generally, the polymer coating on the sulfur coated fertilizer comprises 50 wt% or more of polycaprolactone, preferably more than 70 wt%. Additives or film forming components may be added. Suitable additives can be fillers for example to reduce potential tackiness or improve release, such as for example clay. Other suitable additives include plasticizers if relative high molecular weight polycaprolactones are used. Other suitable additives include film forming polymers, such as for example biodegradable polymers from hydroxy-acids. Other suitable additives include coloring agents to impart color to the coated fertilizer. Suitable colors include yellow, orange, green or red, and preferably an orange coloring agent is used.

In one embodiment, the polymer coating essentially consists of one or more polycaprolactone polymers, which means that the amount of polycaprolactones is about 95 wt% or more, preferably about 100 wt%.

In one preferred embodiment, the polymer coating comprises a mixture of polycaprolactones, wherein the mixture comprises between 5 to 95 wt% of a first polycaprolactone with a molecular weight between 9.000 and 50.000, and between 95 to 5 wt% of a polycaprolactone with a molecular weight between 1000 and 9000. In a more preferred embodiment, the blend ratio is chosen such that average molecular weight is in the range of about 5000 to about 20000, preferably about 6000 to about 15000.

In another embodiment, the polymer coating further comprises at least one of a wax or polymer other than polycaprolactone, preferably a biodegradable oligomer or polymer. Such wax, or polymer, which may have a molecular weight of for example between 300 and 3000, may be present in amounts of about 40 wt% or less, preferably about 20 wt% or less.

The amount of polymer coating relative to the fertilizer may vary depending on the required release and longevity, and generally will be between 1 pph to 10 pph. Preferably, the amount varies between about 1 to about 5 pph relative to the fertilizer weight.

In further embodiments, the sulfur and polymer coated fertilizer may have a further layer present on the fertilizer core, the sulfur coating, or on the polymer coating, such as a thin wax layer.

The fertilizer according the invention preferably exhibits in a laboratory water leach test the following combination of properties:
a. an initial release of about 20% nutrient or less in 24 h
b. A release of higher than 4% of the nutrients between the days 14 and 21 from the beginning of the water leach test.

The initial release at 1 day generally is about 20% or less, preferably about 15% or less.

The nutrient release between days 14 and 21 in the water leach test is preferably about 5% or higher, and even more preferably about 6% or higher. Prior art coated products show a lock-off effect, and show a release of between about 2-3% between 14 and 21 days, as shown in the examples below.

The release over time depends on the required longevity, and can be relatively low for controlled release fertilizers that have a 6 month longevity. For controlled release fertilizers according to the present invention with a longevity of less than 4 months, the release between 14 and 21 days preferably is about 7% or more. For controlled release fertilizers according to the present invention than have a longevity between 4 to 6 months, the release between 14 days and 42 days (6 weeks), preferably is more than 15%, preferably about 20% or more.

The process of making a fertilizer according the invention comprises the steps of providing a sulfur coated granule with a temperature of about 60 °C or more, like for example about 80-85 °C, and the providing the polymer coating components in the melt, after which the polymer coated sulfur coated granular fertilizer is cooled. Preferably, first the molten elemental sulfur is being sprayed onto the granular fertilizer substrate in a rotating drum by so called falling curtain S-spray system at about 85 °C. In the next step the product is transported into a rotating drum where the molten composition polymer mixture is subsequently applied onto the sulfur-substrate-coated product and finally cooled. A solid polymer layer is formed during the spraying. The process can be done in a drum coater with baffles for efficient mixing.

In a preferred embodiment, in the process of making a fertilizer, a fertilizer core is heated to about 80 °C or more, sulfur is applied as a melt, and the polymer coating is applied while the sulfur coated fertilizer has not been cooled to below 40 °C.

The invention will be further elucidated in the examples, without being limited thereto.

### EXAM PLES

### Materials

A commercial standard granular urea was used for all the coating tests with the following characteristics: nutrient content 46% by weight of N, less than 0.3% moisture content (measured by Karl-Fischer titration), an average diameter of 3.2 mm. The urea granular material is sieved before use with standardized sieves: the fraction between 2.36-4.00mm is used.

The sulfur used in the coating of the urea granules was 99.9% pure sulfur in the shape of yellow granules. Melting point is 119 °C.

The materials used as post-coat layers for the sulfur coated urea are:

| Name | Mw | Tm (°C) |
|---|---|---|
| PCL 1 | 14000 | 60 |
| PCL 2 | 25000 | 58-60 |
| PCL 3 | 2500 | 38-48 |
| PCL 4 | 4000 | 55-60 |
| PCL 5 | 3000 | 50-60 |
| PCL 6 | 2000 | 40-50 |
| | | |
| C30+ alpha olefin | | 71.5 |
| Ethylene vinyl acetate (EVA) | | 73 |
| Paraffin wax | | 56-58 |
| Beeswax | | 65 |

### Coating Procedure

2 kg of the granular urea described is fed to a rotating horizontal drum with four baffles. The drum was 35 cm diameter and it was kept rotating at approximately 35 rpm. The drum was heated with a hot air gun to keep urea at about 85°C. The sulfur is added from a hot-melt unit equipped with a pump, heated hose and manually actuated spray-gun with a standard 2mm opening nozzle. The melting tank was heated to 140 °C. The hose and the manual spray gun were heated to 150°C. The pump was set at 200 g/min sulfur flow. The air pressure was set at 2,0 bar. Pressurized air was heated and used to create the spray cone.

After the urea was heated to the desired temperature (85 °C) the spray was started. Molten sulfur from the spray solidifies on the granules creating a sulfur coating. When the desired coating weight of sulfur was achieved, the spray was stopped and granules allowed to cool down. In this case the sulfur coating weight was 15 pph (parts by weight per 100 parts of urea). Several batches were made and blended together to have sufficient and homogeneous sulfur-coated urea product to properly compare the different polymer-coat layers used.

For the coating with the post-coat layer, 700g of the sulfur coated urea was placed in a rotating drum with 25 cm of diameter equipped with three baffles with a rotation speed of 20rpm. The drum was heated to maintain a temperature of the bed of sulfur coated urea of about 80 °C. The post-coat blend chosen for the post-coat layer is molten (typically at around ~130°C) mixed thoroughly and added to the rotating bed of sulfur coated urea by dripping uniformly on the bed. When the desired amount of polymer was added, forced cooling with cold air is used to have a free flowing bed. The product was thereafter bagged and tested.

### Analysis

The performance of the coated fertilizer was measured by the rate of nutrient release from the granule when contacted with water. Slower release rates indicate longer longevity of the product in terms of releasing its nutrients over time. The industry standards for determining the release characteristics of the product include the water leach release test.

### Water leach release test

In the water leach release test, a coated fertilizer was placed in water at 21°C and tested at different time intervals, 24 hours, 7 days, 14 days, 21 days etcetera as required. In particular, twenty grams of coated fertilizer was placed into a flask with 400 mL of de-mineralized water. The flask containing the sample was inverted three times to allow for mixing and kept at 21°C. After a 24 hour period, the flask was inverted three times and a sample was taken to determine the amount of nutrients (nitrogen, N, in case of urea) in the water. The water was replaced and renewed with 400 mL of fresh de-mineralized water. The measurement was repeated again after 7 days. Extra measurement points can be obtained to be able to plot the release profile during the working time of the controlled release fertilizer. After the last measurement, the remaining particles were milled, dissolved to a known volume and analyzed to check closure of the mass balance for each nutrient component. Results are given as weight % of nutrient (N for urea) released into the solution at different times intervals.

Presence or absence of nutrient lock-off can be determined from the water leach release results by calculating the release between the days 14 and 21 in said water leach test. If the amount of nutrient released between days 14 and 21 in the water leach test is lower than 4% of the total nutrient content it is considered that there is nutrient lock-off.

### Caking sensitivity test

Sensitivity to caking (tendency of granules to stick to each other after certain pressure is applied e.g. when stored) was measured. The caking test consists in filling a sample bag with 100g product, seal the bag, place the bag between 2 parallel square plates of 15 cm x 15 cm and place a 10 kg weight on top. The caking test is done in temperature controlled chambers at a desired temperature (40, 50 and 60 °C are typical) for 1 week. After 1 week the sample bag is evaluated, if all granules are still free flowing there is no caking. In case lumps are visible the product is sensitive to caking.

### Field release test

The performance of the coated fertilizers was measured by the rate of nutrient release from the granule when contacted with soil, without specific plant growth. For each product to be tested 10 g material is weighed in a fertilizer rest bag which is made from a mesh enabling good contact with soil and water. The fertilizer rest bag is sealed and tagged for retrieval. The soil is equalized, and the fertilizer rest bags are buried in the soil horizontally 3 cm apart, 5 cm deep. The soil is kept moist during the entire trial time. At seven different times a triplicate sample of each product is retrieved and further analyzed. Per rest bag the particles are milled, dissolved to a known volume and analyzed for amount nutrient remaining in the granules. The amount of nutrient released over time is calculated form this. Results are given as weight % of nutrient (N for urea) released into the soil at different time intervals.

### Mechanical resistance test

The performance of the mechanical resistance of the coated fertilizers was measured by water leach release test after the coated product underwent a mechanical resistance test. For this test, 50 g of product was put in a device mimicking the mechanical damage of the granules when going through an agricultural spreader. The device consists of a feeder for the coated granules which fall to the center of a rotating plate with perpendicular radial blades which hit and propel the granules away from the center simulating the "spreading" action. Coated granules are collected and performance is compared with the one of the coated granules not undergoing the mechanical resistance test.

### Reference Example A-D

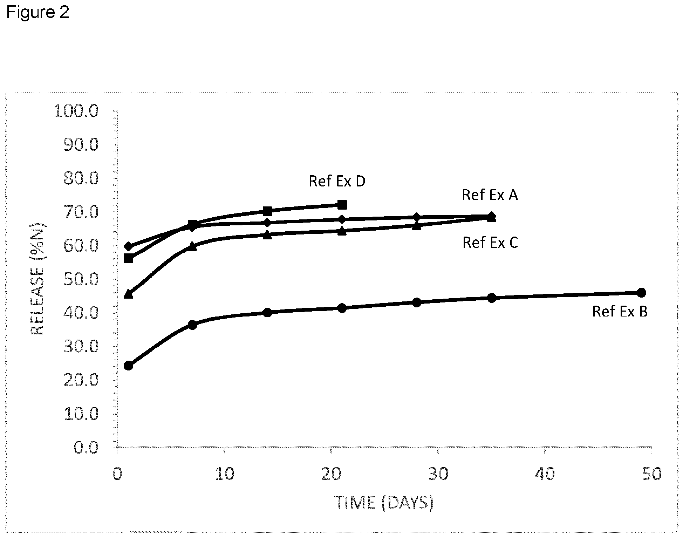

In this example, a number of post-coat polymer coatings for sulfur coated urea as mentioned in the art were prepared and compared. Polymers chosen were: C30+ (Ref Ex A), C30+/EVA (75/25 weight ratio) (Ref Ex B), beeswax (Ref Ex C), and paraffin wax (Ref Ex D). All products had a coating weight of sulfur of 15 pph and 3.5 pph of the post-coat. The release in a water leach test was used to compare the products. The results are shown in figure 2. All samples share a lock off effect as mentioned in the literature. The sample Ref ExB of the blend C30+/EVA (75/25), is the best of the state of the art coatings (as shown from U.S. patent 5,466,274) .

### Examples 1-3

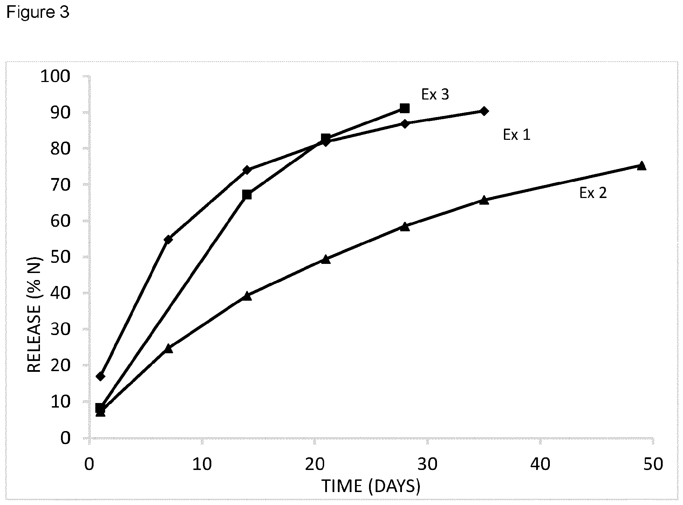

In this example, PCL 1 and PCL 3 were blended in different proportions and used as coating. The ratios of PCL1/PCL3 were 90/10, 75/25 and 0/100 for examples 1, 2 and 3 respectively. All products were made with 15pph of sulfur and 3.5pph of post-coat layer. The release properties in the water leach test can be seen in Figure 3.

### Examples 4-7

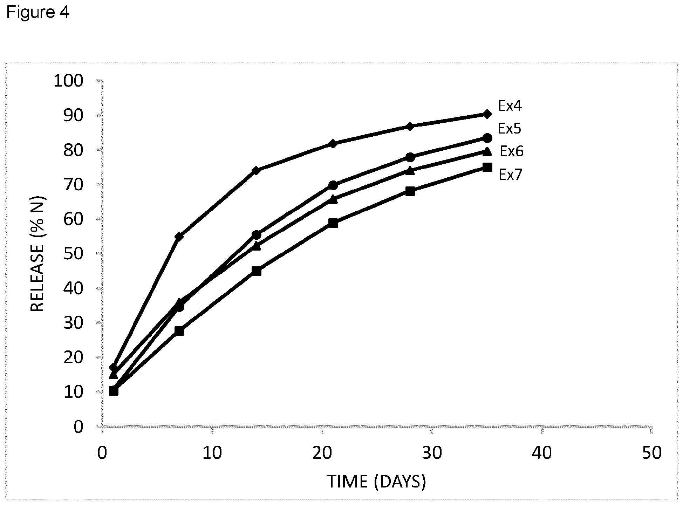

In this example different coating weights of polymer coating were used. The polymer coating chosen was a blend of PCL1 and PCL3 at a ratio of 90/10. Coated fertilizers were made with 15pph of sulfur and 3.5, 4, 5 and 6 pph of polymer coating layer for examples 4, 5, 6 and 7 respectively. The release properties in the water leach test can be seen in the graph in Fig 4.

### Example 8-13

Different coatings based on polycaprolactone were prepared, as follows:

| Example | Coating layer | | |
|---|---|---|---|
| | Relative amounts | High Mw PCL | Low Mw PCL |
| 8 | 30/70 | PCL 2 | PCL 6 |
| 9 | 20/80 | PCL 2 | PCL 5 |
| 10 | 20/80 | PCL 2 | PCL 4 |
| 11 | 75/25 | PCL 1 | PCL 6 |
| 12 | 75/25 | PCL 1 | PCL 5 |
| 13 | 75/25 | PCL 1 | PCL 4 |

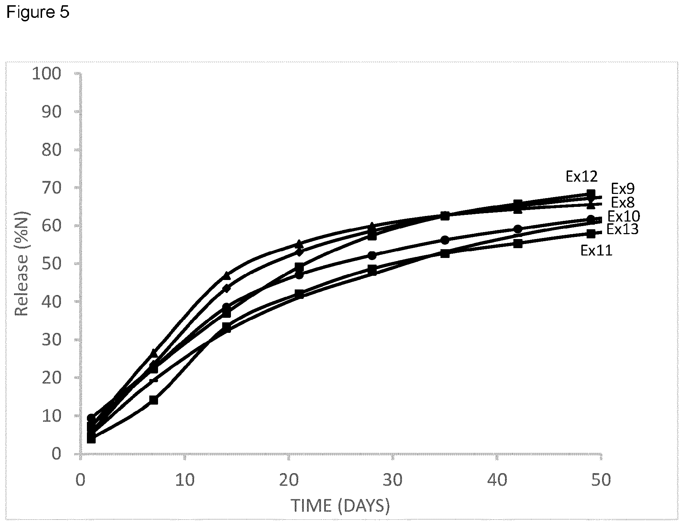

Water release was measured, as shown in Figure 5. This graphs shows that other grades of polycaprolactone blends achieve comparable results, which also shows that polycaprolactone coating systems have broad applicability.

### Lock-off comparison

The samples of the previous examples were compared on the level of nutrient lock-off determined by the release between the days 14 and 21 of the water leach test. Next tables summarize this release for the reference samples and the example samples already presented.

Release 14-21 days for the reference samples (nutrient %)

| **commercial A** | **commercial B** | **commercial C** | **Ref Ex A** | **Ref Ex B** | **Ref Ex C** | **Ref Ex D** |
|---|---|---|---|---|---|---|
| 3.1 | 2.3 | 2.4 | 1.0 | 1.4 | 3.4 | 1.9 |

Release 14-21 days for the example samples (nutrient %)

| **Ex 1** | **Ex 2** | **Ex 3** | **Ex 4** | **Ex 5** | **Ex 6** | **Ex 7** | **Ex 8** | **Ex 9** | **Ex 10** | **Ex 11** | **Ex 12** | **Ex 13** |
|---|---|---|---|---|---|---|---|---|---|---|---|---|
| 7.8 | 10.1 | 15.5 | 7.8 | 14.3 | 13.4 | 13.8 | 8.3 | 9.5 | 8.6 | 8.8 | 12.1 | 8.9 |

### Comparison of caking

Two samples of four different products (three Reference Examples and Example 2 product) were subjected to a caking test at different temperatures. All samples were containing 15 pph of sulfur and 3.5 pph of polymer coating, as described in the examples above.

The results are shown in the next table

| **Temperature** | **Ref Ex B** | **Ref Ex C** | **Ref Ex D** | **Example 2** |
|---|---|---|---|---|
| 40 °C | No caking | Caking | Caking | No caking |
| 60 °C | Caking | Caking | Caking | No Caking |

### Comparison of field release

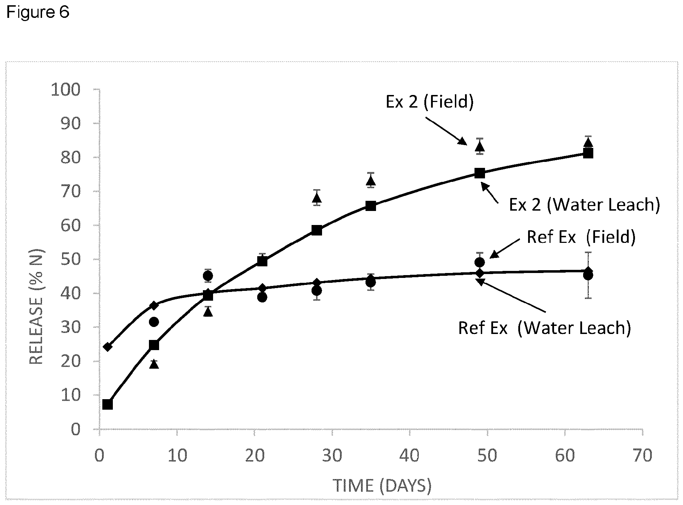

Figure 6 shows the release of the reference example B (indicated as Ref Ex in Figure 6) and the release of the product of example 2 (with a polycaprolactone layer on the sulfur layer; indicated as Ex 2 in Figure 6) in a field test compared with the water leach test. The field release is shown as the individual points with error bars next to the water leach test results as previously presented.

### Mechanical testing comparison

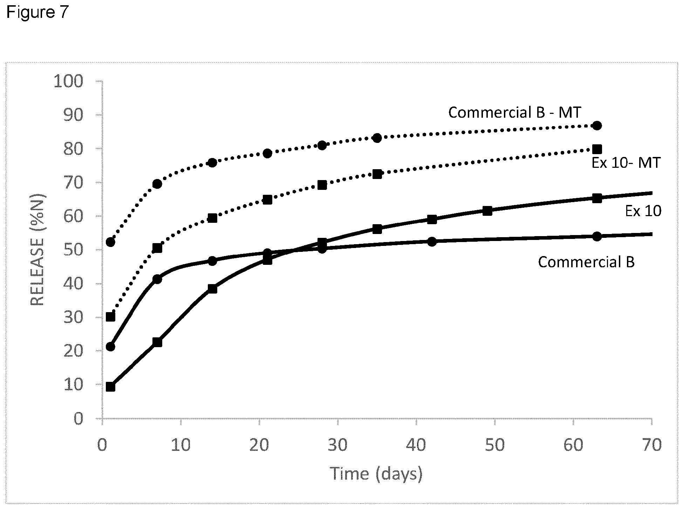

In this comparison a commercial material as used in Fig 1 (Commercial B) and a sample using a polycaprolactone coating (Example 10) were subjected to a mechanical test as described. The release of the samples undergoing the mechanical test was compared to the original release. In Figure 7, Commercial B - MT refers to a sample of Commercial B material subjected to the mechanical test and Ex 10-MT refers to a sample of Example 10 subjected to the mechanical test. The results of the release test are shown in Fig 7. The mechanical resistance of the products using polycaprolactone as coating on the sulfur layer is better than one of existing commercial products, as the release profile of Example 10 before and after mechanical stress applied are closer to each other than the profiles of Commercial product B.

## Claims

1. Sulfur coated granular fertilizer, having a polymer coating on the sulfur layer, wherein the polymer coating comprises polycaprolactone, which is a polymer or copolymer including caprolactone monomers.

2. Fertilizer of claim 1, wherein the polycaprolactone is a copolymer comprising a number of caprolactone monomers attached to a hydroxy-acid or a polyol, the polyol preferably being a diol or triol.

3. Fertilizer according to any one of claims 1-2, wherein the polymer coating comprises a polycaprolactone having an average molecular weight between about 1000 and about 100.000, and mixtures thereof.

4. Fertilizer according to any one of claims 1-3, wherein the polymer coating comprises about 50 wt% or more of polycaprolactone, preferably about 70 wt% or more.

5. Fertilizer according to claim 4, wherein the polymer coating essentially consists of one or more polycaprolactone polymers.

6. Fertilizer according to any one of claims 1-5, wherein the polycaprolactone is a single product with one peak-molecular weight, or is a blend of polycaprolactone polymers with at least two peak molecular weights, wherein the average molecular weight of the polycaprolactone is in the range of about 5000 to about 20000, preferably about 6000 to about 15000

7. Fertilizer according to any one of claims 1-6, wherein the polymer coating comprises a mixture of polycaprolactones, wherein the mixture comprises between 5 to 95% of a first polycaprolactone with a molecular weight between 9.000 and 50.000, and between 95 to 5 wt% of a polycaprolactone with a molecular weight between 1000 and 9000.

8. Fertilizer according to any one of claims 1-7, wherein the polymer coating further comprises a wax or polymer, preferably a biodegradable oligomer or polymer, and/or a coloring agent.

9. Fertilizer according to any one of claims 1-8, wherein a further layer is present on the fertilizer granule, on the sulfur layer or on the polymer coating layer, such as a thin wax layer.

10. Fertilizer according to any one of claims 1-9,
a. wherein the granular fertilizer has a size, as average diameter, between 0.5 and about 10 mm,
b. wherein the sulfur coating is present in amounts of between 5 and 30 parts by weight relative to the fertilizer core,
c. wherein the polymer coating comprises about 50 wt% or more of polycaprolactone,
d. wherein the amount of polymer coating relative to the fertilizer is between 1 pph to 10 pph,
wherein the fertilizer exhibits in a laboratory water leach test the following properties:
a. an initial release of about 20% nutrient or less in 24 h, preferable about 15% or less;
b. a release of more than 4% of the nutrient content between the days 14 and 21 from the beginning of the water leach test, preferably about 5% or more.

11. Fertilizer according to any one of claims 1-10, wherein the fertilizer is urea, KCI, K₂SO₄, NH₄NO₃, ammonium phosphate, or mixtures thereof.

12. Fertilizer according to any one of claims 1-11, wherein the granular fertilizer has a size, as average diameter, between about 0.5 and about 10 mm, preferably between about 1 and about 5 mm.

13. Process of making a fertilizer according to any one of claims 1-12, wherein to a sulfur coated granule having a temperature of about 60 °C or more, polymer coating components are applied in the melt, and the polymer coated sulfur coated granular fertilizer is cooled.

14. Process of making a fertilizer according to claim 13, wherein a fertilizer core is heated to about 80 °C or more, sulfur is applied as a melt, and the polymer coating is applied while the sulfur coated fertilizer has not been cooled to below 40 °C.

## Patentansprüche

1. Schwefelbeschichtetes granuliertes Düngemittel, das eine Polymerbeschichtung auf der Schwefelschicht aufweist, wobei die Polymerbeschichtung Polycaprolacton umfasst, das ein Polymer oder Copolymer ist, einschließlich Caprolactonmonomeren.

2. Düngemittel nach Anspruch 1, wobei das Polycaprolacton ein Copolymer ist, umfassend eine Anzahl von Caprolactonmonomeren, die an eine Hydroxysäure oder ein Polyol gebunden sind, wobei das Polyol vorzugsweise ein Diol oder Triol ist.

3. Düngemittel nach einem der Ansprüche 1 bis 2, wobei die Polymerbeschichtung ein Polycaprolacton umfasst, das ein durchschnittliches Molekulargewicht zwischen etwa 1000 und etwa 100.000 und Mischungen davon aufweist.

4. Düngemittel nach einem der Ansprüche 1 bis 3, wobei die Polymerbeschichtung zu etwa 50 Gew.-% oder mehr Polycaprolacton, vorzugsweise zu etwa 70 Gew.-% oder mehr, umfasst.

5. Düngemittel nach Anspruch 4, wobei die Polymerbeschichtung im Wesentlichen aus einem oder mehreren Polycaprolactonpolymeren besteht.

6. Düngemittel nach einem der Ansprüche 1 bis 5, wobei das Polycaprolacton ein einzelnes Produkt mit einem Spitzenmolekulargewicht ist oder ein Blend aus Polycaprolactonpolymeren mit mindestens zwei Spitzenmolekulargewichten ist, wobei das durchschnittliche Molekulargewicht des Polycaprolactons in dem Bereich von etwa 5000 bis etwa 20.000, vorzugsweise etwa 6000 bis etwa 15.000, liegt.

7. Düngemittel nach einem der Ansprüche 1 bis 6, wobei die Polymerbeschichtung eine Mischung aus Polycaprolactonen umfasst, wobei die Mischung zu zwischen 5 und 95 % ein erstes Polycaprolacton mit einem Molekulargewicht zwischen 9000 und 50.000 und zu zwischen 95 und 5 Gew.-% ein Polycaprolacton mit einem Molekulargewicht zwischen 1000 und 9000 umfasst.

8. Düngemittel nach einem der Ansprüche 1 bis 7, wobei die Polymerbeschichtung ferner ein Wachs oder Polymer, vorzugsweise ein biologisch abbaubares Oligomer oder Polymer, und/oder ein Färbemittel umfasst.

9. Düngemittel nach einem der Ansprüche 1 bis 8, wobei eine weitere Schicht auf dem Düngemittelgranulat, auf der Schwefelschicht oder auf der Polymerbeschichtungsschicht vorhanden ist, wie eine dünne Wachsschicht.

10. Düngemittel nach einem der Ansprüche 1 bis 9,
a. wobei das granulierte Düngemittel eine Größe, als durchschnittlichen Durchmesser, zwischen 0,5 und etwa 10 mm aufweist,
b. wobei die Schwefelbeschichtung in Mengen von zwischen 5 und 30 Gewichtsteilen, relativ zu dem Düngemittelkern, vorhanden ist,
c. wobei die Polymerbeschichtung zu etwa 50 Gew.-% oder mehr Polycaprolacton umfasst,
d. wobei die Menge der Polymerbeschichtung relativ zu dem Düngemittel zwischen 1 pph und 10 pph beträgt,
wobei das Düngemittel in einem Laborwasserauslaugungstest die folgenden Eigenschaften zeigt:
a. eine anfängliche Freisetzung von etwa 20 % Nährstoff oder weniger in 24 h, vorzugsweise etwa 15 % oder weniger;
b. eine Freisetzung von mehr als 4 % des Nährstoffgehalts zwischen dem 14. und 21. Tag ab dem Beginn des Wasserauslaugungstests, vorzugsweise etwa 5 % oder mehr.

11. Düngemittel nach einem der Ansprüche 1 bis 10, wobei das Düngemittel Harnstoff, KCI, K₂SO₄, NH₄NO₃, Ammoniumphosphat oder Mischungen davon ist.

12. Düngemittel nach einem der Ansprüche 1 bis 11, wobei das granulierte Düngemittel eine Größe, als durchschnittlichen Durchmesser, zwischen etwa 0,5 und etwa 10 mm, vorzugsweise zwischen etwa 1 und etwa 5 mm, aufweist.

13. Verfahren zum Herstellen eines Düngemittels nach einem der Ansprüche 1 bis 12, wobei auf ein schwefelbeschichtetes Granulat, das eine Temperatur von etwa 60 °C oder mehr aufweist, Polymerbeschichtungskomponenten in der Schmelze aufgebracht werden und das polymerbeschichtete schwefelbeschichtete granulierte Düngemittel abgekühlt wird.

14. Verfahren zum Herstellen eines Düngemittels nach Anspruch 13, wobei ein Düngemittelkern auf etwa 80 °C oder mehr erhitzt wird, Schwefel als eine Schmelze aufgebracht wird und die Polymerbeschichtung aufgebracht wird, während das schwefelbeschichtete Düngemittel nicht auf unter 40 °C abgekühlt wurde.

## Revendications

1. Engrais granulaire enrobé de soufre, ayant un enrobage polymère sur la couche de soufre, dans lequel l'enrobage polymère comprend du polycaprolactone, qui est un polymère ou un copolymère comportant des monomères de caprolactone.

2. Engrais selon la revendication 1, dans lequel le polycaprolactone est un copolymère comprenant un certain nombre de monomères de caprolactone attachés à un acide hydroxylé ou à un polyol, le polyol étant de préférence un diol ou un triol.

3. Engrais selon l'une quelconque des revendications 1 à 2, dans lequel l'enrobage polymère comprend un polycaprolactone ayant un poids moléculaire moyen compris entre environ 1 000 et environ 100 000, et des mélanges de ceux-ci.

4. Engrais selon l'une quelconque des revendications 1 à 3, dans lequel l'enrobage polymère comprend environ 50 % en poids ou plus de polycaprolactone, de préférence environ 70 % en poids ou plus.

5. Engrais selon la revendication 4, dans lequel l'enrobage polymère est essentiellement constitué d'un ou de plusieurs polymères de polycaprolactone.

6. Engrais selon l'une quelconque des revendications 1 à 5, dans lequel le polycaprolactone est un produit unique avec un poids moléculaire de pic, ou est un mélange de polymères de polycaprolactone avec au moins deux poids moléculaire de pic, dans lequel le poids moléculaire moyen du polycaprolactone est compris entre environ 5 000 et environ 20 000, de préférence entre environ 6 000 et environ 15 000.

7. Engrais selon l'une quelconque des revendications 1 à 6, dans lequel l'enrobage polymère comprend un mélange de polycaprolactones, dans lequel le mélange comprend entre 5 et 95 % d'un premier polycaprolactone avec un poids moléculaire entre 9 000 et 50 000, et entre 95 et 5 % en poids d'un polycaprolactone avec un poids moléculaire entre 1 000 et 9 000.

8. Engrais selon l'une quelconque des revendications 1 à 7, dans lequel l'enrobage polymère comprend en outre une cire ou un polymère, de préférence un oligomère ou un polymère biodégradable, et/ou un agent colorant.

9. Engrais selon l'une quelconque des revendications 1 à 8, dans lequel une autre couche est présente sur le granulé d'engrais, sur la couche de soufre ou sur la couche d'enrobage polymère, telle qu'une fine couche de cire.

10. Engrais selon l'une quelconque des revendications 1 à 9,
a. dans lequel l'engrais granulaire a une taille, en tant que diamètre moyen, comprise entre 0,5 et environ 10 mm,
b. dans lequel l'enrobage de soufre est présent en quantités comprises entre 5 et 30 parties en poids par rapport au noyau d'engrais,
c. dans lequel l'enrobage polymère comprend environ 50 % en poids ou plus de polycaprolactone,
d. dans lequel la quantité d'enrobage polymère par rapport à l'engrais est comprise entre 1 pph et 10 pph,
dans lequel l'engrais présente, lors d'un test de lixiviation à l'eau en laboratoire, les propriétés suivantes :
a. une libération initiale d'environ 20 % ou moins de nutriments en 24 heures, de préférence environ 15 % ou moins ;
b. une libération de plus de 4 % de la teneur en éléments nutritifs entre les jours 14 et 21 à compter du début de l'essai de lixiviation à l'eau, de préférence environ 5 % ou plus.

11. Engrais selon l'une quelconque des revendications 1 à 10, dans lequel l'engrais est de l'urée, du KCI, K₂SO₄, NH₄NO₃, du phosphate d'ammonium ou des mélanges de ceux-ci.

12. Engrais selon l'une quelconque des revendications 1 à 11, dans lequel l'engrais granulaire a une taille, en tant que diamètre moyen, comprise entre environ 0,5 et environ 10 mm, de préférence entre environ 1 et environ 5 mm.

13. Procédé de fabrication d'un engrais selon l'une quelconque des revendications 1 à 12, dans lequel les composants de l'enrobage polymère sont appliqués dans la matière fondue à un granulé enrobé de soufre ayant une température d'environ 60 °C ou plus, et l'engrais granulaire enrobé de soufre enrobé de polymère est refroidi.

14. Procédé de fabrication d'un engrais selon la revendication 13, dans lequel un noyau d'engrais est chauffé à environ 80 °C ou plus, le soufre est appliqué sous forme de matière fondue, et l'enrobage polymère est appliqué alors que l'engrais enrobé de soufre n'a pas été refroidi à moins de 40 °C.
